# EUROPÄISCHE PATENTANMELDUNG

(11) **EP 1 307 006 A2**
(43) Veröffentlichungstag der Anmeldung: **02.05.2003**
(21) Anmeldenummer: 02102277.7
(22) Anmeldetag: 03.09.2002
(51) Int. Cl.: H04L 12/403

(54) **Akzeptanz-Filter**

(30) Priorität: 04.09.2001 DE 10143356
(71) Anmelder: Philips Corporate Intellectual Property GmbH, 20099 Hamburg (DE); Koninklijke Philips Electronics N.V., 5621 BA Eindhoven (NL)
(72) Erfinder: Hank, Peter, Philips Corporate Int. Prop. GmbH, 52088 Aachen (DE); Habben, Hartmut, Philips Corporate Int. Prop. GmbH, 52088 Aachen (DE)
(74) Vertreter: Volmer, Georg, Dipl.-Ing.

(57) **Zusammenfassung**

Ein erfindungsgemäßes Akzeptanz-Filter (1) zur Filterung von Identifizierern in Nachrichten, welche über einen Datenbus zwischen Teilnehmern (2, 3,4) austauschbar sind, ist ausschließlich als Hardware-Schaltung aufgebaut und gsmeinsam für die zugeordneten Teilnehmer (2, 3,4) vorgesehen. Eine von einem zugeordneten Teilnehmer (2, 3,4) empfangener Identifizierer wird lokal mit gespeicherten Identifizierern verglichen und daraufhin überprüft, ob die Nachricht, zu der der empfangene Identifizierer gehört, für den zugeordneten Teilnehmer (2, 3,4), der ihn empfangen hat, relevant ist und ggf. wird ein entsprechendes Akzeptanz-Signal an diesen zugeordneten Teilnehmer (2,3,4) gegeben.

## Beschreibung

In Datenbussystemen, beispielsweise in einem CAN-Datenbussystem, werden Nachrichten zwischen Teilnehmern ausgetauscht. Diese Nachrichten werden durch Identifizierer gekennzeichnet, mittels derer die Teilnehmer feststellen können, ob eine auf dem Datenbus gesendete Nachricht für sie bestimmt ist. Nur dann, wenn dies der Fall ist, wird die Nachricht vollständig empfangen bzw. lokal weiterverarbeitet und/oder abgespeichert.

Für den Zweck der Feststellung, ob eine Nachricht bzw. deren Identifizierer für einen empfangenden Teilnehmer bestimmt ist, sind nach dem Stande der Technik sogenannte Akzeptanz-Filter bekannt, welche einen empfangenen Identifizierer mit lokal abgespeicherten Identifizierern vergleichen. Nur wenn der empfangene Identifizierer mit einem lokal abgespeicherten Identifizierer identisch ist, findet die o. g. Verarbeitung der Nachricht bzw. überhaupt erst der vollständige Empfang der Nachricht statt. Die Zahl der möglichen Identifizierer kann sehr groß sein, daher kann die Suche nach einem solchen Identifizierer eine nicht unbeträchtliche Zeitspanne benötigen. Nach dem Stande der Technik hierfür eingesetzte Lösungen setzten sowohl Hardware- wie auch software-basierte Vergleichsverfahren für die empfangenen und die lokal gespeicherten Identifizierer ein.

Hierbei tritt das Problem auf, dass ggf. Nachrichten nur während einer relativen kurzen Zeitspanne über den Datenbus übertragen werden, das jedoch innerhalb dieser Zeitspanne feststehen muss, ob ein bestimmter Teilnehmer die Nachricht mit dem gesendeten Identifizierer empfangen will oder nicht. Daher ist die für die Suche des Identifizierers zur Verfügung stehende Zeit relativ gering.

Es ist Aufgabe der Erfindung einen Akzeptanz-Filter anzugeben, welcher möglichst schnell arbeitet und gleichzeitig für mehrere zugeordnete Teilnehmer einsetzbar ist.

Diese Aufgabe ist erfindungsgemäß durch die Merkmale des Patentanspruchs 1 gelöst:

Akzeptanz-Filter zur Filterung von Identifizierern in Nachrichten, welche über einen Datenbus zwischen Teilnehmern austauschbar sind, wobei das Akzeptanz-Filter ausschließlich als Hardware-Schaltung aufgebaut ist, gemeinsam für mehrere zugeordnete Teilnehmer vorgesehen ist, jeden von einem zugeordneten Teilnehmer empfangenen Identifizierer mittels Vergleich mit lokal gespeicherten Identifizierern daraufhin überprüft, ob die Nachricht, zu der empfangene Identifizierer gehört, für den zugeordneten Teilnehmer der ihn empfangen hat, relevant ist, und gegebenenfalls ein entsprechendes Akzeptanz-Signal an diesen zugeordneten Teilnehmer gibt.

Das erfindungsgemäße Akzeptanz-Filter setzt für den Vergleich eines empfangenen Identifizierers mit lokal abgespeicherten Identifizierern ausschließlich eine Hardwareschaltung ein. Diese dedizierte Hardwareschaltung kann schneller arbeiten als nach dem Stande der Technik bekannte Lösungen. Daher ist es auch möglich erfindungsgemäß dem Akzeptanz-Filter mehrere Teilnehmer zuzuordnen. Das Akzeptanz-Filter tritt immer dann in Aktion, wenn einer der zugeordneten Teilnehmer eine Nachricht bzw. den Beginn einer Nachricht mit einem Identifizierer erhält. Das Akzeptanz-Filter vergleicht dann den empfangenen Identifizierer mit lokal gespeicherten Identifizierern und überprüft dabei, ob der empfangene Identifizierer für den zugeordneten Teilnehmer, der ihn empfangen hat, relevant ist. Dies geschieht durch Vergleich des empfangenen Identifizierers mit lokal abgespeicherten Identifizierern, die dem zugeordneten Teilnehmer zugeordnet sind. Stellt das Akzeptanz-Filter fest, dass der empfangene Identifizierer mit einem dieser lokal gespeicherten und dem Teilnehmer, der ihn empfangen hat, zugeordneten Identifizierer identisch ist, so gibt das Akzeptanz-Filter eine entsprechende Nachricht an den betreffenden Teilnehmer.

Erhält der betreffende Teilnehmer ein solches Akzeptanzsignal, so ist ihm bekannt, dass die Nachricht, zu der der Identifizierer gehört, für ihn bestimmt ist und er empfängt sie vollständig bzw. verarbeitet sie weiter. Erhält er kein solches Akzeptanzsignal, weist er die Nachricht zurückt bzw. empfängt sie nicht.

Aufgrund des Aufbaus und der Arbeitsweise des Akzeptanz-Filters arbeitet dieses relativ schnell und kann somit für mehrere zugeordnete Teilnehmer eingesetzt 'werden, wobei immer noch sichergestellt ist, dass jeder der zugeordneten Teilnehmer ggf. rechtzeitig ein Akzeptanzsignal erhält, so dass er noch in der Lage ist, die Nachricht vollständig zu empfangen.

Dies wird vor allem dadurch erreicht, dass das Akzeptanz-Filter vollständig in Hardware aufgebaut ist. Hierzu kann insbesondere der Aufbau gemäß einer Ausgestaltung der Erfindung nach Anspruch 2 vorgesehen sein. Durch diese Struktur ist es möglich, einen relativ schnellen Vergleich eines empfangenen Identifizierers mit lokal gespeicherten Identifizierern vorzunehmen.

Dabei arbeitet die Hardwareschaltung gemäß Anspruch 2 vorteilhaft im Detail entsprechend Patentanspruch 3. Im Kern wird dabei der empfangene Identifizierer, der von dem zugeordneten Teilnehmer an das Akzeptanz-Filter übermittelt wird, mit lokal abgespeicherten Identifizierern, die in einem Identifizierer-Speicher abgelegt sind, mittels eines Komparators vergleichen. Dabei werden die lokal gespeicherten Identifizierer mittels einer Steuerung des Akzeptanz-Filters adressiert, wobei diese Adressierung so lange verändert wird, bis mittels des Komparators eine Identität festgestellt wird oder bis alle lokal gespeicherten Identifizierer durchsucht sind. Wird eine Identität festgestellt, so gibt die Steuerung das Akzeptanzsignal dem zugeordneten Teilnehmer, der den Identifizierer empfangen hat.

Bei dieser Suche kann vorteilhaft, wie gemäß einer weiteren Ausgestaltung der Erfindung nach Anspruch 4 vorgesehen ist, ein sogenannter binärer Such-Algorithmus eingesetzt werden. Bei solchen binären Such-Algorithmus wird ein Suchbereich in jedem Suchvorgang neu definiert. Alle lokal gespeicherten Identifizierer sind zusammen mit Nummer der zugeordneten Teilnehmer abgespeichert. Dabei sind zunächst die Nummern der Teilnehmer in aufsteigender Folge in den Identifizierer-Speicher abgespeichert. Innerhalb der Nummernbereiche der einzelnen Teilnehmer sind wiederum die Identifizierer in aufsteigender Folge gespeichert.

Zu Beginn eines solchen binären Suchvorgangs wird zunächst der gesamte Speicherbereich betrachtet und als Suchbereich definiert. Etwa in der Mitte des Suchbereichs wird eine Teilnehmernummer mit Identifizierer von der Steuerung adressiert und es findet ein entsprechender Vergleich mit dem empfangenen Identifizierer und der Nummer des zugeordneten Teilnehmer statt. Ist dieser Vergleich positiv, d. h sind die beiden Nummern und Identifizierer identisch, so ist bereits ein Identifizierer gefunden und es kann ein entsprechendes Akzeptanz-Signal an den zugeordneten Teilnehmer gegeben werden. Liegt eine solche Identität nicht vor, wird festgestellt, ob der empfangene Identifizierer größer oder kleiner als der adressierte Identifizierer ist. Ist er größer, wird ein neuer Suchbereich definiert, der die obere Hälfte des Adress-Bereichs umfasst, ist er kleiner, wird ein neuer Suchbereich definiert, der die untere Hälfte des alten Suchbereichs umfasst. In jedem Falle wird also ein neuer Suchbereich definiert, der etwa halb so groß wie der vorherige ist. Auch in dem neuen Suchbereich wird wieder ein Vergleich eines mittleren Wertes mit dem empfangenen Identifizierer und der Nummer des zugeordneten Teilnehmers vorgenommen. Bei Identität ist wiederum ein gesuchter Identifizierer gefunden, andernfalls findet wieder eine Neueinteilung des Suchbereichs statt, in dem der Suchbereich des zweiten Schrittes nunmehr nochmals geteilt wird und je nach dem, ob der empfangene Identifizierer größer oder kleiner als der letzte adressierte Vergleichswert war wieder ein neuer Suchbereich ober- oder unterhalb des im zweiten Suchschrittes adressierten Wertes erfolgt. Dieser Vorgang setzt sich so lange fort, bis der gesamte Adress-Bereich, also alle lokal gespeicherten Identifizierer mit zugeordneten Teilnehmer-Nummern durchsucht sind. Ist dies ergebnislos der Fall, d. h. ist keinerlei Identität festgestellt worden, so ist die empfangene Nachricht nicht für den zugeordneten Teilnehmer bestimmt. Ist jedoch eine Identität gefunden worden, so wird ein entsprechendes Akzeptanz-Signal an den zugeordneten Teilnehmer gegeben und der weitere Suchvorgang eingestellt.

Um den Suchvorgang weiter zu beschleunigen, kann vorteilhaft, wie gemäß einer weiteren Ausgestaltung der Erfindung nach Anspruch 5 vorgesehen ist, ein Vergleich des empfangenen Identifizierers mit dem lokal abgespeicherten Identifizierern nur innerhalb solcher Identifizierer gleicher Länge stattfinden. Es können ggf. in einem Datenbus Identifizierer verschiedener Bit-Länge vorgesehen sein. Wird der lokale Vergleich nur mit solchen Identifizierern vorgenommen, die die gleiche Bit-Länge aufweisen wie der empfangene Identifizierer, verkürzt dies den Suchvorgang weiter.

Zur weiteren Vereinfachung kann wenigstens ein Teil der lokal gespeicherten Identifizierer, wie gemäß einer weiteren Ausgestaltung der Erfindung nach Anspruch 6 vorgesehen ist, nicht explizit mit seiner Nummer abgespeichert sein, sondern es kann ein Nummernbereich von Identifizierern gespeichert sein. Liegt ein empfangener Identifizierer in einem abgespeicherten Nummerbereich von Identifizieren, so liegt ebenfalls eine Identität vor und es wird ein Akzeptanzsignal an den empfangenden Teilnehmer gegeben.

Dabei kann der Vergleich eines empfangenen Identifizierers, wie gemäß einer weiteren Ausgestaltung der Erfindung nach Anspruch 7 vorgesehen ist, vorteilhaft in der Weise erfolgen, dass zunächst ein Vergleich mit den explizit gespeicherten Identifizierern und dann ein Vergleich mit den Identifiziererbereichen vorgenommen wird.

In dem Fall, dass mehrere zugeordnete Teilnehmer gleichzeitig oder nahezu gleichzeitig neue Identifizierer empfangen, werden diese, wie gemäß einer weiteren Ausgestaltung der Erfindung nach Anspruch 8 vorgesehen ist, in der Rangfolge der zugeordneten Teilnehmer, die sich aus deren Nummern ergibt, abgearbeitet. Damit kann beispielsweise sichergestellt werden, dass auch unter sehr schwierigen Bedingungen, d. h als wenn beispielsweise mehrere zugeordnete Teilnehmer mehr oder weniger gleichzeitig mehrere Meldungen empfangen, für die wichtigsten Teilnehmer mit der höchsten Priorität das Akzeptanz-Filter vorrangig tätig wird, so dass für diese Teilnehmer mit der hohen Priorität auf jeden Fall rechtzeitig ggf. Akzeptanz-Signale an die Teilnehmer abgegeben werden können.

Nachfolgend wird ein Ausführungsbeispiel der Erfindung näher erläutert. Es zeigen:
- Figur 1: ein Blockschaltbild eines erfindungsgemäßen Akzeptanz-Filters mit mehreren zugeordneten Teilnehmern und
- Figur 2: eine schematische Darstellung eines Speicherbereichs lokal abgespeicherter Teilnehmer-Nummern und Identifizierer, wie sie beispielsweise in dem. Identifizierer-Speicher des Akzeptanz-Filters gemäß Figur 1 gespeichert sein können.

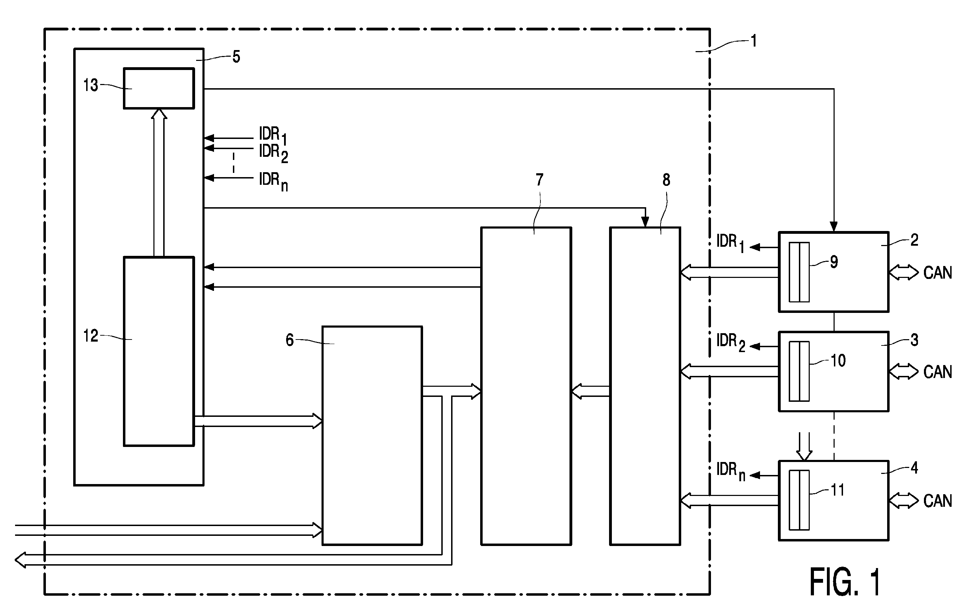

Figur 1 stellt in Form eines Blockschaltbildes ein erfindungsgemäßes Akzeptanz-Filter 1 dar, dem mehrere Teilnehmer in einem Datenbussystem zugeordnet sind. Die Figur 1 zeigt der Einfachheit halber drei Teilnehmer 2, 3 und 4; selbstverständlich können ggf. noch mehr Teilnehmer vorgesehen sein. Die zugeordneten Teilnehmer 2, 3 und 4 sind Teilnehmer eines CAN-Datenbusses und tauschen über diesen Datenbus Meldungen aus, die ggf. natürlich auch von anderen Teilnehmern, die in der Figur nicht dargestellt sind kommen können oder an diese gesendet werden.

Jedem der Teilnehmer 2, 3 und 4 ist eine Teilnehmer-Nummer zugeordnet. In dem Beispiel gemäß der Figur ist dem Teilnehmer 2 die Nummer 1, dem Teilnehmer 3 die Nummer 2 und dem Teilnehmer 4 die Nummer n zugeordnet.

Jede über den CAN-Datenbus, der in der Figur nicht weiter dargestellt ist, übertragene Nachricht enthält am Anfang einen sogenannten Identifizierer. Der Identifizierer besteht aus einer Nummernfolge, welche einem empfangenden Teilnehmer signalisiert, ob die Nachricht, zu der der Identifizierer gehört, für ihn bestimmt ist oder nicht. Für den empfangenden Teilnehmer bedeutet dies, dass er den Identifizierer, den er empfangen hat, mit lokal gespeicherten Identifizierern vergleichen muss um festzustellen, ob eine Identität vorliegt und infolge dessen die empfangene Nachricht für ihn bestimmt ist.

Da dieser Vergleich eine gewisse Zeit in Anspruch nimmt, andererseits jedoch die zur Verfügung stehende Zeit begrenzt ist, da innerhalb einer Übertragungszeit einer Nachricht feststehen muss ob der Teilnehmer die Nachricht empfängt oder nicht, ist das erfindungsgemäße Akzeptanz-Filter 1 gemeinsam für die zugeordneten Teilnehmer 2, 3 und 4 vorgesehen und überprüft für von denen empfangene Identifizierer, ob diese für den jeweils zugeordneten Teilnehmer lokal gespeichert sind, d. h ob es sich um einen Identifizierer

handelt, der eine Nachricht signalisiert, die der jeweils zugeordnete Teilnehmer 2, 3 oder 4 empfangen soll.

Um dies zu ermöglichen ist das erfindungsgemäße Akzeptanz-Filter 1 vollständig hardwaremäßig aufgebaut, d h. bei allen folgenden erläuterten Elementen des Akzeptanz-Filters 1 handelt es sich um rein hardwaremäßig aufgebaute Schaltungen, die ohne Software, Prozessoren und ähnliches arbeiten.

Das Akzeptanz-Filter 1 weist eine ebenfalls vollständig hardwaremäßig aufgebaute Steuerung 5 auf, die die übrigen Elemente des Akzeptanzfilters 1 bei einem Vergleich der Identifizierer steuert.

Das Akzeptanz-Filter 1 weist ferner einen Identifizierer-Speicher 6 auf, in dem die Nummern der zugeordneten Teilenehmer 2, 3 und 4 gespeichert sind und in dem für die jeweiligen Nummern die zugeordneten Identifizierer gespeichert sind, d. h. also diejenigen Identifizierer, die dem Teilnehmer mit der jeweiligen Nummer zugeordnet sind.

Innerhalb des Akzeptanz-Filters 1 ist ferner ein Komparator 7 vorgesehen, mittels dessen ein Vergleich eines empfangenen Identifizierers und der Nummer des zugeordneten Teilnehmers mit den in dem Identifizierer-Speicher abgespeicherten Werten vorgenommen werden kann.

Mittels eines Multiplexers 8 wird jeweils der empfangene Identifizierer desjenigen Teilnehmers 2, 3 oder 4, der ihn empfangen hat, dem Komparator 7 zugeführt.

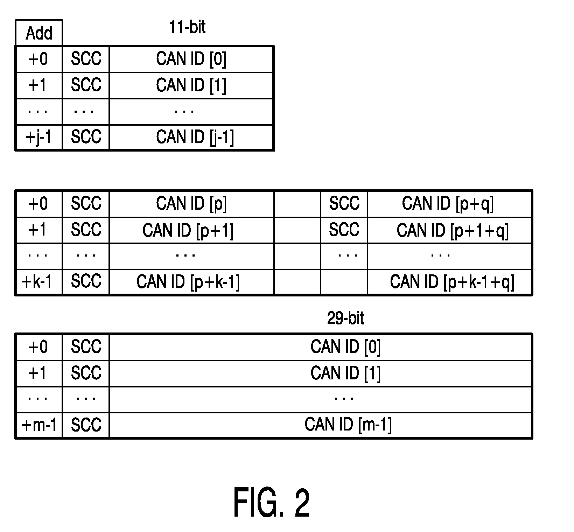

In Figur 2 findet sich eine schematische Darstellung der in dem Identifizierer-Speicher 6 gespeicherten Daten

Die Darstellung gemäß Figur 2 zeigt in der ersten Spalte die Speicher-Adressen der jeweiligen Datensätze. Innerhalb der Datensätze findet sich zunächst eine Nummer SCC des zugeordneten Teilnehmers. In der zweiten Spalte des ersten und des dritten Blockes finden sich Identifizierer-Nummern, die dem jeweiligen Speicher mit der SCC zugeordnet. Dabei handelt es sich um diejenigen Identifizierer-Nummern, die für den jeweiligen Teilnehmer mit der betreffenden Nummer solchen Nachrichten vorangestellt werden, die der Teilnehmer empfan gen soll. Der erste und der dritte Block zeigen in der schematischen Darstellung gemäß Figur 2 unterschiedlicher Länge, da in diesem Ausführungsbeispiel Identifizierer zweier verschiedener Längen vorgesehen sind Die Identifizierer in dem ersten Block weisen eine Länge von 11 Bit auf; diejenigen in dem dritten Block eine Länge von 29 Bit. Alle Datensätze mit Teilnehmernummer und Identifizierer sind in numerisch aufsteigender Ordnung gespeichert.

Der zweite Block der schematischen Darstellung gemäß Figur 2 zeigt Identifizierer-Bereiche. Dabei ist jeweils für einen Teilenehmer einer bestimmten Nummer (SCC) ein Bereich von zugeordneten Identifizierern gespeichert. Liegt ein empfangener Identifizierer mit seiner Nummer in einem in diesen zweiten Block gespeicherten Identifizierer-Bereich, so handelt es sich ebenfalls um einen Identifizierer einer solchen Nachricht, die der Teilnehmer empfangen soll. Durch die Wahl solcher Identifizierer-Bereiche kann sowohl in dem Identifizierer Speicherplatz gespart werden; es kann aber auch der Suchvorgang dadurch verkürzt werden.

Selbstverständlich handelt es sich bei der Darstellung gemäß Figur 2 lediglich um ein Ausführungsbeispiel; es können auch noch Identifizierer anderer Längen vorgesehen sein; genauso kann natürlich auch für Identifizierer der Längen 29 Bit ein Bereich vorgesehen sein, in dem Identifizierer-Bereiche gespeichert sind. In jedem falle sind alle Datensätze mit Teilnehmernummer und Identifizierer in numerisch aufsteigender Ordnung gespeichert.

Im folgenden wird anhand des Blockschaltbildes der Figur 1 und der schematischen Darstellung der in dem Identifizierer-Speicher 6 der Schaltung gemäß Figur 1 gespeicherten Nummern der zugeordneten Teilnehmer und der jeweils zugeordneten Identifizierer gemäß Figur 2 eine Erläuterung der Arbeitsweise des erfindungsgemäßen Akzeptanz-Filters vorgenommen.

Empfängt ein zugeordneter Teilnehmer 2, 3 oder 4 der Darstellung gemäß Figur 1 eine Nachricht, oder genauer gesagt den Beginn einer Nachricht, mit einem Identifizierer, so gibt der Teilnehmer diesen Identifizierer über einen in ihm vorgesehenen Zwischenspeicher 9, 10 oder 11 an den Multiplexer 8 des Akzeptanz-Filters 1. Gleichzeitig gibt der betreffende zugeordnete Teilnehmer ein Signal IDR₁, IDR₂ oder IDRₙ an die Steuerung 5 des Akzeptanz-Filters 1. Damit ist der Steuerung bekannt, dass einer der zugeordneten Teilnehmer 2, 3 oder 4 einen Identifizierer empfangen hat. Ferner ist der Steuerung 5 bekannt, welcher dieser Teilnehmer mit welcher Nummer dies ist. In entsprechender Weise adressiert die Steuerung 5 den Multiplexer 8 so, dass der Identifizierer des betreffenden Teilnehmers an den Komparator 7 durchgeschaltet wird.

Die Steuerung 5 erzeugt ferner mittels eines Adressen-Generators 12 eine Adresse, welche an den Identifizierer-Speicher 6 weitergegeben wird und welche in diesem einen abgespeicherten Datensatz adressiert. Dieser Datensatz gelangt an einen weiteren Eingang des Komparators 7.

Der Komparator 7 vergleicht die von dem Identifizierer-Speicher 6 gelieferten Daten mit den Daten, die von dem Multiplexer 8 kommen. In beiden Fällen handelt es sich dabei sowohl um die Nummer des Teilnehmers wie auch um eine Identifizierer-Nummer.

Im folgenden soll der Einfachheit halber zunächst davon ausgegangen werden, dass in dem Identifizierer-Speicher 6 ausschließlich Identifizierer einer festen Länge gespeichert sind und das keinerlei Identifizierer-Bereiche in dem Speicher 6 abgelegt sind.

In einem solchen Fall sind in dem Identifizierer-Speicher 6 alle Identifizierer und die jeweils zugeordneten Nummern der Teilnehmer 2, 3 und 4 abgelegt. Dabei sind diese Datensätze so abgelegt, dass sie zunächst nach der Nummer der Teilnehmer und innerhalb der Nummern der Teilnehmer nach den Nummern der Identifizierer in aufsteigender Folge gespeichert sind. Es finden sich in dem Identifizierer-Speicher 6 also zunächst beispielsweise die Datensätze des Teilnehmers 1, wobei für den Teilnehmer 1 die Identifizierer wieder mit aufsteigender numerischer Folge gespeichert sind Es finden sich dann die Identifizierer des Teilnehmers mit der Nummer 2, die in sich wiederum mit aufsteigender Folge der Identifizierer-Nummern gespeichert sind. Dies setzt sich fort für alle zugeordneten Teilnehmer.

Es geht bei der Suche bzw. bei dem Vergleich eines empfangenen Identifizierers mit denjenigen in dem Identifizierer-Speicher 6 abgelegten Identifizierern also darum, festzustellen, ob die Station, die den Identifizierer empfangen hat, sich in der gespeicherten Liste in dem Identifizierer-Speicher 6 findet. Liegt eine solche Identität vor, ist die empfangene Nachricht für den zugeordneten Teilnehmer mit der betreffenden Nummer vorgesehen und daher durch diesen zu empfangen. Ist dies der Fall, gibt die Steuerung 8 mittels eines Akzeptanz-Signal-Generators 13 ein entsprechendes Akzeptanzsignal an den zugeordneten Teilnehmer 2, 3 oder 4, der den Identifizierer empfangen hat.

Die oben erläuterte Ordnung der Datensätze in dem Identifizierer-Speicher 6 ist vorgesehen um diesen Suchvorgang zu verkürzen. Es wird bei der Suche in dem erfindungsgemäßen Akzeptanz-Filter 1 vorteilhaft ein sogenannter binärer Such-Algorithmus eingesetzt. In einem solchen binären Such-Algorithmus findet in jedem Suchschritt eine Verkleinerung des Suchbereichs statt, wobei jeweils der Suchbereich bezüglich seiner Größe halbiert wird.

Empfängt einer der zugeordneten Teilnehmer 2, 3 oder 4 einen Identifizierer, so wird, wie oben bereits erläutert, die Nummer des empfangenen Teilnehmers und der Identifizierer selbst mittels des Multiplexers 8 an den Komparator 7 gegeben. Wird ein binärer Such-Algorithmus eingesetzt, so adressiert der Adress-Generator 12 innerhalb der Steuerung 5 den Identifizierer-Speicher 6 zunächst so, dass in dem gesamten Speicherbereich in dem die Datensätze wie oben erläutert abgelegt sind, zunächst in der Mitte dieses Bereichs ein Datensatz mit Teilnehmer-Nummer und Identifizierer-Nummer adressiert wird. In dem Komparator 7 findet dann ein Vergleich der Nummer des empfangenen Teilnehmers und des empfangenen Identifizierers mit diesen abgespeicherten Nummern statt. Bei Identität gibt der Komparator 7 ein entsprechendes Signal an die Steuerung 5. Identität bedeutet, dass sowohl die Teilnehmer-Nummer wie auch die Identifizierer-Nummer identisch sind. Dies bedeutet, dass die empfangene Nachricht für denjenigen Teilnehmer, der sie empfangen hat, bestimmt ist und das er die Nachricht also zu empfangen hat. Es gibt dann der Akzeptanz-Signal-Generator 13 ein entsprechendes Signal an den jeweils zugeordneten Teilnehmer 2, 3 oder 4, der dieses Identifizierer empfangen hat. Wird bei dem Vergleich jedoch keine Identität festgestellt, so gibt der Komparator 7 ein Signal an die Steuerung 5, welches signalisiert, ob die Nummer des empfangenden Teilnehmers und die Nummer des empfangenen Identifizierers größer oder kleiner als die in dem Identifizierer-Speicher 6 adressierten Werte sind. Sind die beiden Werte größer, so wird als neuner Suchbereich derjenige Adress-Bereich in dem Identifizierer-Speicher 6 oberhalb des im letzten Suchschritt adressierten Datensatzes angenommen.

Sind die Werte kleiner, so ist der untere Teil des Datensatzes unterhalb des im letzten Such schritt adressierten Datensatzes in dem Identifizierer-Speicher 6 als neuer Suchbereich anzusehen.

Es wird also nach einem negativen Vergleichsergebnis der Suchbereich des vorherigen Gleichschrittes in den nächsten Vergleichsschritt quasi halbiert und es wird derjenige Suchbereich als neuer Suchbereich definiert, in dem aufgrund des Vergleichsergebnisses der gesuchte Wert von Teilnehmer-Nummer und Identifizierer-Nummer zu erwarten ist.

In dem nunmehr neuen, etwa halbierten Suchbereich wird wiederum in der Mitte des Suchbereiches in dem Identifizierer-Speicher 6 ein neuer Datensatz mit Teilnehmer-Nummer und Identifizierer-Nummer adressiert und der o. b. Vergleichsvorgang mittels des Komparators 7 wiederholt sich Liegt wiederum keine Identität vor, so wird dieser zweite bereits halbierte Suchbereich nochmals halbiert, wobei wiederum das gleiche Kriterium für die Wahl des neuen Suchbereichs wie im ersten Schritt gewählt wird

Damit wird erreicht, dass in jedem Suchschritt sich der Suchbereich halbiert, so dass eine Beschleunigung des Suche gegenüber einem einfachen Vergleich stattfindet.

Der Suchvorgang mit den immer kleiner werdenden Suchbereichen wird so lange fortgesetzt, bis eine Identität der Nummer des empfangenden Teilnehmers und der empfangenen Identifizierer-Nummer mit den in dem Identifizierer-Speicher 6 adressierten Wert vorliegt. Sobald dies der Fall ist, wird in oben beschriebenen Weise an den zugeordneten Teilnehmer, der den Identifizierer empfangen hat, ein Akzeptanz-Signal gegeben.

Einerseits dadurch, dass das Akzeptanz-Filter vollständig in Hardware aufgebaut ist, andererseits verstärkt durch den binären Such-Algorithmus, ist das Akzeptanz-Filter 1 in der Lage, sehr schnell einen Vergleich eines empfangenen Identifizierers und der zugeordneten Teilnehmer-Nummer mit den lokal gespeicherten Werten vorzunehmen und somit sehr schnell dem empfangenden Teilnehmer mitzuteilen, ob die Nachricht mit dem empfangenen Identifizierer für ihn bestimmt ist oder nicht. Wegen dieses Umstandes kann das erfindungsgemäße Akzeptanz-Filter 1 für mehrere Teilnehmer gleichzeitig eingesetzt werden

Bei der Erläuterung der Vergleichsvorgänge war davon ausgegangen worden, dass in dem Akzeptanz-Filter lediglich Identifizierer einer festen Länge und keinerlei Identifizierer-Bereiche gespeichert sind.

Wie bereits anhand der Figur 2 erläutert wurde, können jedoch auch Identifizierer verschiedener Länge und ggf. Identifizierer-Bereiche gespeichert sein, wie dies Figur 2 zeigt.

In einem solchen Fall kann der oben beschriebene binäre Suchvorgang wie folgt modifiziert werden:

Es wird zunächst die Länge eines empfangenen Identifizierers festgestellt. Der erste Suchbereich wird dann von vornherein so festgelegt, dass er ausschließlich die Speicherbereiche des Identifizierer-Speicher 6 umfasst, die Identifizierer der empfangenen Länge beinhalten. Wird in diesem Bereich mit der oben beschriebenen binären Suche kein Identifizierer gefunden, so wird in solchen Speicherbereichen weitergesucht, die Identifizierer-Bereiche der gleichen Länge beinhalten, wie der empfangene Identifizierer.

Mit anderen Worten der oben beschriebene Suchvorgang findet zunächst in den Bereichen des Identifizierer-Speichers statt, in denen die Identifizierer gleicher Länge explizit gespeichert sind und wird anschließend in den Bereichen fortgesetzt, in denen Identifizierer-Bereiche der entsprechenden Länge gespeichert sind In Speicherbereichen, in denen Identifizierer einer anderen Länge oder Identifizierer-Bereiche einer anderen Länge gespeichert sind, wird nicht gesucht.

Auf diese Weise kann der Suchvorgang weiter beschleunigt werden

## Patentansprüche

1. Akzeptanz-Filter (1) zur Filterung von Identifizierern in Nachrichten, welche über einen Datenbus zwischen Teilnehmern (2,3,4) austauschbar sind, wobei das Akzeptanz-Filter (1) ausschließlich als Hardware-Schaltung aufgebaut ist, gemeinsam für mehrere zugeordnete Teilnehmer (2,3,4) vorgesehen ist, jeden von einem zugeordneten Teilnehmer (2,3,4) empfangenen Identifizierer mittels Vergleich mit lokal gespeicherten Identifizierern daraufhin überprüft, ob die Nachricht, zu der empfangene Identifizierer gehört, für den zugeordneten Teilnehmer (2,3,4), der ihn empfangen hat, relevant ist, und gegebenenfalls ein entsprechendes Akzeptanz-Signal an diesen zugeordneten Teilnehmer (2,3,4) gibt.

2. Akzeptanz -Filter nach Anspruch 1,
**dadurch gekennzeichnet,**
**dass** das Akzeptanz-Filter (1) eine Steuerung (5), welche ausschließlich in Hardware aufgebaut ist, einen Identifizierer-Speicher (6), einen Komparator (7) sowie einen Multiplexer (8) aufweist.

3. Akzeptanz-Filter nach Anspruch 2,
**dadurch gekennzeichnet,**
**dass** ein zugeordneter Teilnehmer (2,3,4) nach Empfang eines Identifizierers der Steuerung (5) eine Identfizierer-Empfangsmeldung abgibt, woraufhin die Steuerung (5) den empfangenen Identifizierer mittels des Multiplexers (8) dem Komparator (7) zuführt und den Identifizierer-Speicher (6) adressiert, so dass mittels des Komparators (7) ein Vergleich eines adressierten, gespeicherten und des empfangenen Identifizierers vorgenommen wird, wobei die Adressierung solange verändert wird, bis entweder ein Vergleich mit allen gespeicherten Identifizierern stattgefunden hat oder bis eine Identität zwischen einem adressierten, gespeicherten und dem empfangenen Identifizierer festgestellt wird, und dass die Steuerung (5) nach Feststellung einer solchen Identität dem zugeordneten Teilnehmer (2,3,4), der die Meldung mit dem Identifizierer erhalten hat, in dem Falle, dass Meldungen mit diesem Identifizierer für den betreffenden zugeordneten Teilnehmer (2,3,4) vorgesehen sind, an diesen Teilnehmer (2,3,4) ein Akzeptanz-Signal abgibt.

4. Akzeptanz-Filter nach einem der Ansprüche 1 bis 3,
**dadurch gekennzeichnet,**
**dass** das Akzeptanz-Filter (1) zum Vergleich eines empfangenen Identifizierers und der Nummer der zugeordneten empfangenden Teilnehmers (2,3,4) mit lokal in numerisch ansteigender Ordnung gespeicherten Nummern der zugeordneten Teilnehmer (2,3,4) und innerhalb der Nummernbereiche in numerisch ansteigender Ordnung gespeicherten Identifizierern einen binären Such-Algorithmus einsetzt, bei dem aus einem Suchbereich in den abgespeicherten Nummern und Identifizierern ein etwa in der Mitte des Suchbereichs angeordneter Nummer und Identifizierer mit einem empfangenen Identifizierer und der Nummer des empfangenden Teilnehmers (2,3,4) verglichen wird und je nach Vergleichsergebnis ein neuer Suchbereich oberhalb oder unterhalb des vorigen Suchbereichs als neuer Suchbereich definiert wird, wobei diese Vergleiche und neuen Suchbereichseinteilungen solange wiederholt werden, bis bei einem Vergleich Identität festgestellt wird, was bedeutet, dass für den empfangenden Teilnehmer (2,3,4) der gesuchte Identifizierer gefunden worden ist.

5. Akzeptanz-Filter nach einem der Ansprüche 1 bis 4,
**dadurch gekennzeichnet,**
**dass** die Identifizierer verschiedene Formate aufweisen und dass ein Vergleich eines empfangenen Identifizierers nur mit solchen lokal gespeicherten Identifizieren erfolgt, die das gleiche Format wie der empfangene Identifizierer aufweisen, wobei der zugeordnete Teilnehmer (2,3,4), der eine Nachricht mit einem Identifizierer erhalten hat, dessen Format an das Akzeptanz-Filter signalisiert.

6. Akzeptanz-Filter nach einem der Ansprüche 1 bis 5,
**dadurch gekennzeichnet,**
**dass** ein Teil der lokal gespeicherten Identifizierer einzeln gespeichert ist und dass ein anderer Teil in Form eines numerischen Bereichs gespeichert ist.

7. Akzeptanz-Filter nach Anspruch 6,
**dadurch gekennzeichnet,**
**dass** ein Vergleich eines empfangenen Identifizierers zuerst mit den einzeln gespeicherten identifizieren und dann mit den Identifizierer-Bereichen erfolgt.

8. Akzeptanz-Filter nach einem der Ansprüche 1 bis 7,
**dadurch gekennzeichnet,**
**dass** das Akzeptanz-Filter (1), in dem Fall, dass mehrere zugeordnete Teilnehmer (2,3,4) gleichzeitig einen Eingang neuer Nachrichten mit Identifizierern melden, deren Filterung durch das Akzeptanz-Filter geordnet nach der Nummer des zugeordneten Teilnehmers (2,3,4) erfolgt.

9. Akzeptanz-Filter nach Anspruch 2 oder 3,
**dadurch gekennzeichnet,**
**dass** der Identifizierer-Speicher (6) als Look-Up-Table konfiguriert ist und als Festspeicher oder als über den Datenbus ladbarer flüchtiger Speicher ausgebildet ist.

10. Akzeptanz-Filter nach einem der Ansprüche 1 bis 9,
**dadurch gekennzeichnet,**
**dass** es sich bei dem Datenbus um einen solchen nach der CAN-Spezifikation handelt.
